# EUROPEAN PATENT APPLICATION

(11) **EP 4 528 878 A1**
(43) Date of publication of application: **26.03.2025**
(21) Application number: 23823812.5
(22) Date of filing: 07.06.2023
(51) Int. Cl.: H01M 10/0569, H01G 11/06, H01G 11/30, H01G 11/60, H01G 11/64, H01M 4/38, H01M 4/48, H01M 10/052, H01M 10/0567, H01M 10/0568

(54) **NON-AQUEOUS ELECTROLYTE AND NON-AQUEOUS ELECTROLYTE ELECTRIC POWER STORAGE ELEMENT**

(30) Priority: 16.06.2022 JP 2022097569
(71) Applicant: GS Yuasa International Ltd., Kisshoin, Minami-ku, Kyoto-shi, Kyoto 601-8520 (JP)
(72) Inventor: TANOI, Akihito, Kyoto-shi, Kyoto 601-8520 (JP); ICHIKAWA, Shinnosuke, Kyoto-shi, Kyoto 601-8520 (JP); NAKAJIMA, Nobuhiro, Kyoto-shi, Kyoto 601-8520 (JP); SHIMIZU, Takashi, Kyoto-shi, Kyoto 601-8520 (JP); TAKAHASHI, Katsuyuki, Kyoto-shi, Kyoto 601-8520 (JP); MIYAKE, Takumi, Kyoto-shi, Kyoto 601-8520 (JP)
(74) Representative: Isarpatent
(86) International application number: PCT/JP2023/021212
(87) International publication number: WO 2023/243520

(57) **Abstract**

A nonaqueous electrolyte according to an aspect of the present invention, for use in a nonaqueous electrolyte energy storage device with a negative electrode containing a silicon-based active material, contains an electrolyte salt, a nonaqueous solvent including a fluorinated cyclic carbonate and a fluorinated chain solvent, and a cyclic compound containing a sulfur element, and the content ratio of the fluorinated cyclic carbonate in the nonaqueous solvent is 5% by volume or more.

## Description

### TECHNICAL FIELD

The present invention relates to a nonaqueous electrolyte and a nonaqueous electrolyte energy storage device.

### BACKGROUND ART

Nonaqueous electrolyte secondary batteries typified by lithium ion secondary batteries are often used for electronic devices such as personal computers and communication terminals, motor vehicles, and the like, because the batteries are high in energy density. The nonaqueous electrolyte secondary batteries generally include a pair of electrodes electrically separated from each other by a separator, and a nonaqueous electrolyte interposed between the electrodes, and are configured to allow charge transport ions to be transferred between the two electrodes for charge-discharge. In addition, capacitors such as lithium ion capacitors and electric double layer capacitors are also widely used as nonaqueous electrolyte energy storage devices other than the nonaqueous electrolyte secondary batteries.

Nonaqueous electrolyte energy storage devices in which a silicon-based active material (an active material containing a silicon element) is used as a negative active material are known (see Patent Documents 1 to 3). As the silicon-based active material, a simple substance of silicon element, silicon oxide, and the like are known. The silicon-based active material has, for example, a higher discharge capacity than a carbon-based active material (carbon material) such as graphite, and thus, is expected as a promising negative active material.

### PRIOR ART DOCUMENTS

### PATENT DOCUMENTS

Patent Document 1: JP-A-2015-053152
Patent Document 2: JP-A-2010-212228
Patent Document 3: JP-A-2004-356078

### SUMMARY OF THE INVENTION

### PROBLEMS TO BE SOLVED BY THE INVENTION

A nonaqueous electrolyte storage device using a silicon-based active material has the disadvantage that its discharge capacity tends to decrease with charge-discharge cycles. In contrast, according to the inventors' findings, nonaqueous electrolyte energy storage device using nonaqueous electrolytes containing a fluorinated cyclic carbonate such as a fluoroethylene carbonate tend to increase the capacity retention ratios after charge-discharge cycles. However, cases of applying a nonaqueous electrolyte containing fluorinated cyclic carbonate to a nonaqueous electrolyte energy storage device in which a silicon-based active material is used cause another disadvantage of significantly increasing the volume of the nonaqueous electrolyte energy storage device in association with charge-discharge cycles. This is considered to be, for example, because the silicon-based active material has a large volume change in association with charge-discharge, thus causing a film formed on the surface of the silicon-based active material at the time of initial charge to fail to adequately follow the volume change of the silicon-based active material in repeating the subsequent charge-discharge. More specifically, a generation of cracks in the film in association with the volume change of the silicon-based active material is considered to cause the surface of the silicon-based active material to be exposed to come into contact with the fluorinated cyclic carbonate contained in the nonaqueous electrolyte, thereby causing the fluorinated cyclic carbonate to be decomposed to generate gas, and then increasing the volume of the nonaqueous electrolyte energy storage device.

The present invention has been made based on such circumstances as described above, and an object of the invention is to provide a nonaqueous electrolyte capable of achieving a balance between a high capacity retention ratio and a small volume change after charge-discharge cycles in a nonaqueous electrolyte energy storage device with a negative electrode containing a silicon-based active material, and a nonaqueous electrolyte energy storage device including such a nonaqueous electrolyte, and capable of achieving a balance between a high capacity retention ratio and a small volume change after charge-discharge cycles.

### MEANS FOR SOLVING THE PROBLEMS

A nonaqueous electrolyte according to an aspect of the present invention, for use in a nonaqueous electrolyte energy storage device with a negative electrode containing a silicon-based active material, contains an electrolyte salt, a nonaqueous solvent including a fluorinated cyclic carbonate and a fluorinated chain solvent, and a cyclic compound containing a sulfur element, and the content ratio of the fluorinated cyclic carbonate in the nonaqueous solvent is 5% by volume or more.

A nonaqueous electrolyte energy storage device according to another aspect of the present invention includes: a negative electrode containing a silicon-based active material; and the nonaqueous electrolyte according to an aspect of the present invention.

### ADVANTAGES OF THE INVENTION

According to an aspect of the invention, it is possible to provide a nonaqueous electrolyte capable of achieving a balance between a high capacity retention ratio and a small volume change after charge-discharge cycles in a nonaqueous electrolyte energy storage device with a negative electrode containing a silicon-based active material, and a nonaqueous electrolyte energy storage device including such a nonaqueous electrolyte, and capable of achieving a balance between a high capacity retention ratio and a small volume change after charge-discharge cycles.

### BRIEF DESCRIPTION OF THE DRAWINGS

Fig. 1 is a see-through perspective view illustrating an embodiment of a nonaqueous electrolyte energy storage device.
Fig. 2 is a schematic diagram illustrating an embodiment of an energy storage apparatus configured by assembling a plurality of nonaqueous electrolyte energy storage devices.

### MODE FOR CARRYING OUT THE INVENTION

First, outlines of a nonaqueous electrolyte and a nonaqueous electrolyte energy storage device and disclosed by the present specification will be described.
[1] A nonaqueous electrolyte according to an aspect of the present invention, for use in a nonaqueous electrolyte energy storage device with a negative electrode containing a silicon-based active material, contains an electrolyte salt, a nonaqueous solvent including a fluorinated cyclic carbonate and a fluorinated chain solvent, and a cyclic compound containing a sulfur element, and the content ratio of the fluorinated cyclic carbonate in the nonaqueous solvent is 5% by volume or more.

The nonaqueous electrolyte according to [1] is capable of achieving a balance between a high capacity retention ratio and a small volume change after charge-discharge cycles in the nonaqueous electrolyte energy storage device with the negative electrode containing the silicon-based active material. The reason therefor is not clear, but the following reasons are presumed. In the nonaqueous electrolyte energy storage device in which the silicon-based active material is used, the nonaqueous solvent of the nonaqueous electrolyte contains the fluorinated cyclic carbonate at 5% by volume or more, thereby increasing the capacity retention ratio after charge-discharge cycles. This is considered to be due to the formation of a suitable film derived from the fluorinated cyclic carbonate or the like on the surface of the silicon-based active material. However, when the fluorinated cyclic carbonate is used simply, a film formation reaction through decomposition of the fluorinated cyclic carbonate continuously proceeds during charge-discharge cycles, and at the time, gas is generated as a side reaction product, and the volume of the nonaqueous electrolyte energy storage device is significantly increased. In contrast, in the case of the nonaqueous electrolyte obtained by further adding the cyclic compound containing the sulfur element to a nonaqueous solvent including the fluorinated cyclic carbonate and the fluorinated chain solvent, both the cyclic compound containing the sulfur element and the fluorinated cyclic carbonate are involved to form a film, thus inhibiting the generation of gas as a side reaction product. While a film formation reaction involving both the fluorinated chain solvent and the cyclic compound containing the sulfur element is less likely to proceed, a film formation reaction involving both the cyclic compound containing the sulfur element and the fluorinated cyclic carbonate preferentially proceeds, and the generation of gas is inhibited.

In the case of a nonaqueous electrolyte obtained by further adding a cyclic compound containing a sulfur element to a nonaqueous solvent obtained by combining a fluorinated cyclic carbonate and another solvent including no fluorinated chain solvent, however, a film formation reaction involving both the cyclic compound containing the sulfur element and the other solvent also proceeds, thereby consuming the cyclic compound containing the sulfur element. As a result, while the film formation reaction involving both the cyclic compound containing the sulfur element and the fluorinated cyclic carbonate is inhibited, the decomposition reaction of the fluorinated cyclic carbonate proceeds, thereby insufficiently inhibiting the gas generation. In addition, a film produced by involving both the cyclic compound containing the sulfur element and the other solvent is not good in quality, and is considered to fail to sufficiently protect the surface of the silicon-based active material. Thus, when a large amount of cyclic compound containing a sulfur element is contained in a nonaqueous solvent including another solvent including no fluorinated chain solvent, a decrease is caused in capacity retention ratio after charge-discharge cycles.

Furthermore, in the case of a nonaqueous electrolyte obtained by adding a cyclic compound containing a sulfur element to a nonaqueous solvent composed only of a fluorinated cyclic carbonate, the decomposition of the fluorinated cyclic carbonate fails to be sufficiently inhibited because the fluorinated cyclic carbonate is present in a large amount. In addition, in the case of a nonaqueous solvent composed only of a fluorinated cyclic carbonate, the nonaqueous electrolyte undergoes an increase in viscosity, and it may be difficult to achieve good charge-discharge performance.

For such reasons as described above, the nonaqueous electrolyte according to [1] is presumed to be capable of achieving a balance between a high capacity retention ratio and a small volume change after charge-discharge cycles in the nonaqueous electrolyte energy storage device with the negative electrode containing the silicon-based active material.

[2] In the nonaqueous electrolyte according to [1], the total content ratio of the fluorinated cyclic carbonate and the fluorinated chain solvent in the nonaqueous solvent may be 60% by volume or more.

The use of the nonaqueous electrolyte according to [2] allows the capacity retention ratio and volume change of the nonaqueous electrolyte energy storage device after charge-discharge cycles to be respectively further increased and further reduced.

[3] In the nonaqueous electrolyte according to [1] or [2], the fluorinated chain solvent may be a fluorinated chain carbonate.

The use of the nonaqueous electrolyte according to [3] allows the capacity retention ratio and volume change of the nonaqueous electrolyte energy storage device after charge-discharge cycles to be respectively further increased and further reduced.

[4] In the nonaqueous electrolyte according to any one of [1] to [3], the electrolyte salt may have a concentration of 1.2 mol/dm³ or more.

The use of the nonaqueous electrolyte according to [4] allows the volume change of the nonaqueous electrolyte energy storage device after charge-discharge cycles to be further reduced. The reason therefor is not clear, but in the case of the high concentration of the electrolyte salt in the nonaqueous electrolyte, the increased amount of fluorinated cyclic carbonate coordinated to cations constituting the electrolyte salt is considered to result in a decreased amount of free fluorinated cyclic carbonate. In such a case, the decomposition of the fluorinated cyclic carbonate and the gas generation in association with the decomposition are presumed to be inhibited, thereby reducing the volume change.

[5] In the nonaqueous electrolyte according to any one of [1] to [4], the cyclic compound containing the sulfur element may have a cyclic sulfate structure or a sultone structure.

The present inventors have found that with the use of the nonaqueous electrolyte according to the above [5], a particularly high-quality film is formed by involving both such a cyclic compound and the fluorinated cyclic carbonate in association with charge-discharge, and that similar film formation reactions are developed in the case of a compound that has a cyclic sulfate structure and the case of a compound that has a sultone structure. Accordingly, the use of the nonaqueous electrolyte according to [5] allows the capacity retention ratio and volume change of the nonaqueous electrolyte energy storage device after charge-discharge cycles to be respectively further increased and further reduced.

[6] In the nonaqueous electrolyte according to any one of [1] to [4], the cyclic compound containing the sulfur element may have a sultone structure.

The use of the nonaqueous electrolyte according to [6] results in formation of a particularly high-quality film, thus further inhibiting the decomposition of the fluorinated cyclic carbonate and the gas generation in association with the decomposition. For the reasons, the use of the nonaqueous electrolyte according to [6] allows the volume change of the nonaqueous electrolyte energy storage device after charge-discharge cycles to be further reduced.

[7] In the nonaqueous electrolyte according to any one of [1] to [6], the cyclic compound containing the sulfur element may have a carbon-carbon double bond.

With the use of the nonaqueous electrolyte according to [7], the reductive decomposition is considered more likely to be caused at a high potential, because the cyclic compound containing the sulfur element has a carbon-carbon double bond, and the LUMO (Lowest Unoccupied Molecular Orbital) of such a cyclic compound is thus low in calculation. Accordingly, the use of such a cyclic compound makes the film formation reaction involving both the cyclic compound and the fluorinated cyclic carbonate more likely to be caused before the decomposition of the fluorinated cyclic carbonate at the time of charge, thus inhibiting the gas generation due to the decomposition of the fluorinated cyclic carbonate. For the reasons, the use of the nonaqueous electrolyte according to [7] allows the volume change of the nonaqueous electrolyte energy storage device after charge-discharge cycles to be further reduced.

[8] In the nonaqueous electrolyte according to any one of [1] to [5], the cyclic compound containing the sulfur element may be ethylene sulfate.

The use of the nonaqueous electrolyte according to [8] results in formation of a particularly high-quality film, thus further inhibiting the decomposition of the fluorinated cyclic carbonate and the gas generation in association with the decomposition. For the reasons, the use of the nonaqueous electrolyte according to [8] allows the volume change of the nonaqueous electrolyte energy storage device after charge-discharge cycles to be further reduced.

[9] The nonaqueous electrolyte according to any one of [1] to [8] may be used for a nonaqueous electrolyte energy storage device with a negative electrode containing a silicon-based active material containing a silicon oxide.

The nonaqueous electrolyte according to [9] is capable of achieving a balance between a high capacity retention ratio and a small volume change after charge-discharge cycles in the nonaqueous electrolyte energy storage device with the negative electrode containing the silicon-based active material containing the silicon oxide.

[10] A nonaqueous electrolyte energy storage device according to another aspect of the present invention includes: a negative electrode containing a silicon-based active material; and the nonaqueous electrolyte according to any one of [1] to [9].

The nonaqueous electrolyte energy storage device according to [10], which is a nonaqueous electrolyte energy storage device with a negative electrode containing a silicon-based active material, is capable of achieving a balance between a high capacity retention ratio and a small volume change after charge-discharge cycles.

[11] The nonaqueous electrolyte energy storage device according to [10] includes a negative electrode containing a silicon-based active material containing a silicon oxide, and the nonaqueous electrolyte according to any one of [1] to [9].

The nonaqueous electrolyte energy storage device according to [11], which is a nonaqueous electrolyte energy storage device with a negative electrode containing a silicon-based active material containing a silicon oxide, is capable of achieving a balance between a high capacity retention ratio and a small volume change after charge-discharge cycles.

A nonaqueous electrolyte, a nonaqueous electrolyte energy storage device, an energy storage apparatus, and a method for manufacturing the nonaqueous electrolyte energy storage device according to an embodiment of the present invention, and other embodiments will be described in detail. It is to be noted that the names of the respective constituent members (respective constituent elements) for use in the respective embodiments may be different from the names of the respective constituent members (respective constituent elements) for use in the background art.

### <Nonaqueous electrolyte>

The nonaqueous electrolyte according to an embodiment of the present invention contains an electrolyte salt, a nonaqueous solvent, and a cyclic compound containing a sulfur element. Typically, the electrolyte salt and the cyclic compound containing the sulfur element are dissolved in the nonaqueous solvent. The nonaqueous electrolyte is a nonaqueous electrolyte for use in a nonaqueous electrolyte energy storage device with a negative electrode containing a silicon-based active material. The nonaqueous electrolyte energy storage device with the negative electrode containing the silicon-based active material will be described in detail later.

### (Electrolyte salt)

The electrolyte salt can be appropriately selected from known electrolyte salts. Examples of the electrolyte salt include a lithium salt, a sodium salt, a potassium salt, a magnesium salt, and an onium salt. Among these examples, the lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂Fs)₂, LiN(SO₂CF₃)(SO₂C₄F₉), LiC(SO₂CF₃)₃, and LiC(SO₂C₂F₅)₃. Among these salts, the inorganic lithium salts are preferable. From viewpoints such as oxidation resistance and good film formation, the electrolyte salt preferably contains a fluorine element. The electrolyte salt is more preferably LiPFs. One of the electrolyte salts, or two or more thereof can be used.

The lower limit of the concentration of the electrolyte salt in the nonaqueous electrolyte may be, at 20°C under 1 atm, 0.1 mol/dm³, 0.3 mol/dm³, 0.5 mol/dm³, or 0.7 mol/dm³, but is preferably 0.9 mol/dm³, more preferably 1.0 mol/dm³, still more preferably 1.2 mol/dm³, even more preferably 1.4 mol/dm³. When the concentration of the electrolyte salt in the nonaqueous electrolyte is equal to or more than the lower limit mentioned above, the volume change of the nonaqueous electrolyte energy storage device after charge-discharge cycles can be further reduced. The upper limit of the concentration of the electrolyte salt in the nonaqueous electrolyte is preferably 2.5 mol/dm³, more preferably 2.0 mol/dm³, still more preferably 1.7 mol/dm³, even more preferably 1.5 mol/dm³ at 20°C under 1 atm. The concentration of the electrolyte salt in the nonaqueous electrolyte can be equal to or more than any of the lower limits mentioned above, and equal to or less than any of the upper limits mentioned above.

### (Nonaqueous solvent)

The nonaqueous solvent includes a fluorinated cyclic carbonate and a fluorinated chain solvent. The fluorinated cyclic carbonate is capable of forming a good film on the surface of the silicon-based active material, and also has high oxidation resistance. Thus, the nonaqueous solvent includes the fluorinated cyclic carbonate, thereby allowing the capacity retention ratio after charge-discharge cycles to be increased in the nonaqueous electrolyte energy storage device with the negative electrode containing the silicon-based active material. In contrast, the fluorinated chain solvent is a solvent in which a film formation reaction involving both the fluorinated cyclic carbonate and the cyclic compound containing the sulfur element is less likely to proceed, and is considered to also have high oxidation resistance. Thus, the nonaqueous solvent includes the fluorinated chain solvent, thereby without inhibiting the proceeding of the film formation reaction involving both the cyclic compound containing the sulfur element and the fluorinated cyclic carbonate. In addition, the nonaqueous solvent includes the fluorinated cyclic carbonate and the fluorinated chain solvent, thereby, for example, optimizing the viscosity of the nonaqueous electrolyte, and thereby allowing the nonaqueous electrolyte energy storage device to achieve good charge-discharge performance.

The fluorinated cyclic carbonate, which is a type of cyclic solvent, refers to a compound in which some or all of hydrogen atoms of the cyclic carbonate are substituted with fluorine atoms. Examples of the fluorinated cyclic carbonate include fluorinated ethylene carbonates such as fluoroethylene carbonate (FEC) and difluoroethylene carbonate (DFEC), fluorinated propylene carbonates, and fluorinated butylene carbonates. Among these carbonates, the fluorinated ethylene carbonates are preferable, and FEC is more preferable. FEC has high oxidation resistance, and is capable of, for example, sufficiently increasing the capacity retention ratio after charge-discharge cycles in the nonaqueous electrolyte energy storage device. One of the chain fluorinated carbonates, or two or more thereof can be used.

The lower limit of the content ratio of the fluorinated cyclic carbonate in the nonaqueous solvent is 5% by volume, preferably 10% by volume, more preferably 15% by volume, still more preferably 20% by volume, even more preferably 25% by volume, particularly preferably 30% by volume. The content ratio of the fluorinated cyclic carbonate is equal to or more than the lower limit mentioned above, thereby allowing the capacity retention ratio after charge-discharge cycles in the nonaqueous electrolyte energy storage device to be further increased. The upper limit of the content ratio of the fluorinated cyclic carbonate in the nonaqueous solvent is preferably 80% by volume, more preferably 60% by volume, still more preferably 50% by volume, even more preferably 40% by volume particularly preferably 35% by volume. The content ratio of the fluorinated cyclic carbonate is equal to or less than the upper limit mentioned above, thereby allowing, for example, the viscosity of the nonaqueous electrolyte to be reduced. The content ratio of the fluorinated cyclic carbonate in the nonaqueous solvent can be equal to or more than any of the lower limits mentioned above, and equal to or less than any of the upper limits mentioned above.

The fluorinated chain solvent refers to a compound in which some or all of hydrogen atoms of the chain solvent are substituted with fluorine atoms. Examples of the fluorinated chain solvent include fluorinated chain hydrocarbons, fluorinated chain ethers, fluorinated chain esters, and fluorinated chain carbonates, and the fluorinated chain carbonates are particularly preferable. As the fluorinated chain solvent, a fluorinated chain solvent that has a partial structure of CF₃-CH₂-O- is also preferable. One of the fluorinated chain solvents, or two or more thereof can be used.

Examples of the fluorinated chain carbonates include compounds represented by R^{a}-O-CO-O-R^{b} (R^{a} is a fluorinated alkyl group. R^{b} is an alkyl group or a fluorinated alkyl group.). The R^{b} mentioned above is preferably an alkyl group. In addition, the number of carbon atoms for each of R^{a} and R^{b} is preferably 1 to 3, more preferably 1 or 2.

Examples of the fluorinated chain carbonate can include fluoromethyl methyl carbonate, fluoroethyl methyl carbonate, difluoroethyl methyl carbonate, trifluoroethyl methyl carbonate, bis(trifluoroethyl) carbonate, methyl fluoropropyl carbonate, methyl difluoropropyl carbonate, methyl trifluoropropyl carbonate, methyl tetrafluoropropyl carbonate, methyl pentafluoropropyl carbonate, bis(trifluoropropyl) carbonate, bis(tetrafluoropropyl) carbonate, and bis(pentafluoropropyl) carbonate. Among these fluorinated chain carbonates, 2,2,2-trifluoroethyl methyl carbonate (TFEMC), which is a trifluoroethyl methyl carbonate, is preferable.

Examples of the fluorinated chain ester can include methyl 3,3,3-trifluoropropionate (FMP), -2,2,2-trifluoroethyl acetate (FEA), methyl trifluoroacetate, ethyl trifluoroacetate, -2,2,2-trifluoroethyl trifluoroacetate, methyl 2-fluoropropionate, and ethyl 2-fluoropropionate.

Examples of the fluorinated ether include 1,1,2,2-tetrafluoro-2,2,2-trifluoroethyl ether (TFEE), 1,1,2,2-tetrafluoroethyl-ethyl ether, 1,1,2,2-tetrafluoroethyl-2,2,3,3-tetrafluoropropyl ether (HFE), 1,1,2,2-tetrafluoroethyl-2,2,3,3,3-pentafluoropropyl ether, and 1,1,2,2-tetrafluoropropyl-1,1,2,3,3,3-hexafluoropropyl ether.

The content ratio of the fluorinated chain solvent in the nonaqueous solvent is preferably 20% by volume or more and 95% by volume or less, more preferably 40% by volume or more and 90% by volume or less, still more preferably 50% by volume or more and 85% by volume or less, even more preferably 60% by volume or more and 80% by volume or less, particularly preferably 65% by volume or more and 75% by volume or less. The content ratio of the fluorinated chain solvent falls within the range mentioned above, thereby allowing the capacity retention ratio and volume change after charge-discharge cycles in the nonaqueous electrolyte energy storage device to be respectively further increased and further reduced.

The lower limit of the total content ratio of the fluorinated cyclic carbonate and fluorinated chain solvent in the nonaqueous solvent is preferably 60% by volume, more preferably 70% by volume, still more preferably 80% by volume, even more preferably 90% by volume, 95% by volume, or 99% by volume. The total content ratio of the fluorinated cyclic carbonate and fluorinated chain solvent in the nonaqueous solvent is equal to or more than the lower limit mentioned above, thereby allowing the capacity retention ratio and volume change after charge-discharge cycles in the nonaqueous electrolyte energy storage device to be respectively further increased and further reduced. The upper limit of the total content ratio of the fluorinated cyclic carbonate and fluorinated chain solvent in the nonaqueous solvent may be 100% by volume.

The nonaqueous solvent may contain another nonaqueous solvent besides the fluorinated cyclic carbonate and the fluorinated chain solvent. Examples of other nonaqueous solvent include non-fluorinated cyclic carbonates, non-fluorinated chain carbonates, esters other than fluorinated chain esters, and ethers other than fluorinated chain ethers. Examples of the non-fluorinated cyclic carbonates include ethylene carbonate (EC), propylene carbonate (PC), butylene carbonate (BC), vinylene carbonate (VC), vinylethylene carbonate (VEC), chloroethylene carbonate, styrene carbonate, 1-phenylvinylene carbonate, and 1,2-diphenylvinylene carbonate. Examples of the non-fluorinated chain carbonate include diethyl carbonate (DEC), dimethyl carbonate (DMC), ethyl methyl carbonate (EMC), and diphenyl carbonate.

The volume ratio between the cyclic solvent and the chain solvent (cyclic solvent : chain solvent) in the nonaqueous solvent preferably falls within, for example, the range of 5 : 95 to 50 : 50.

The lower limit of the content ratio of the cyclic carbonates (fluorinated cyclic carbonate and non-fluorinated cyclic carbonate) in the cyclic solvent is preferably 60% by volume, more preferably 70% by volume, still more preferably 80% by volume, even more preferably 90% by volume, 95% by volume, or 99% by volume. The content ratio of the cyclic carbonates in the cyclic solvent is equal to or more than the lower limit mentioned above, thereby allowing the capacity retention ratio after charge-discharge cycles in the nonaqueous electrolyte energy storage device to be further increased. The upper limit of the total content ratio of the cyclic carbonates in the cyclic solvent may be 100% by volume.

The lower limit of the content ratio of the fluorinated cyclic carbonate in the cyclic carbonates is preferably 60% by volume, more preferably 70% by volume, still more preferably 80% by volume, even more preferably 90% by volume, 95% by volume, or 99% by volume. The content ratio of the fluorinated cyclic carbonate in the cyclic carbonates is equal to or more than the lower limit mentioned above, thereby allowing the capacity retention ratio after charge-discharge cycles in the nonaqueous electrolyte energy storage device to be further increased. The upper limit of the content ratio of the fluorinated cyclic carbonate in the cyclic carbonates may be 100% by volume.

The lower limit of the content ratio of the fluorinated chain solvent in the chain solvent is preferably 60% by volume, more preferably 70% by volume, still more preferably 80% by volume, even more preferably 90% by volume, 95% by volume, or 99% by volume. The content ratio of the fluorinated chain solvent in the chain solvent is equal to or more than the lower limit mentioned above, thereby allowing the capacity retention ratio and volume change after charge-discharge cycles in the nonaqueous electrolyte energy storage device to be respectively further increased and further reduced. The upper limit of the content ratio of the fluorinated chain solvent in the chain solvent may be 100% by volume.

The lower limit of the content ratio of the carbonates (the total of the fluorinated cyclic carbonate, fluorinated chain carbonate, and non-fluorinated carbonate) in the nonaqueous solvent is preferably 60% by volume, more preferably 70% by volume, still more preferably 80% by volume, even more preferably 90% by volume, 95% by volume, or 99% by volume. The content ratio of the carbonates in the nonaqueous solvent is equal to or more than the lower limit mentioned above, thereby allowing the capacity retention ratio and volume change after charge-discharge cycles in the nonaqueous electrolyte energy storage device to be respectively further increased and further reduced. The upper limit of the total content ratio of the carbonates in the nonaqueous solvent may be 100% by volume.

The lower limit of the total content ratio of the fluorinated solvents (the total of the fluorinated cyclic carbonate, fluorinated chain solvent, and other fluorinated solvents) in the nonaqueous solvent is preferably 60% by volume, more preferably 70% by volume, still more preferably 80% by volume, even more preferably 90% by volume, 95% by volume, or 99% by volume. The fluorinated solvent refers to a solvent that has a fluorine atom. The total content ratio of the fluorinated solvents in the nonaqueous solvent is equal to or more than the lower limit mentioned above, thereby allowing the capacity retention ratio and volume change after charge-discharge cycles in the nonaqueous electrolyte energy storage device to be respectively further increased and further reduced. The upper limit of total content ratio of the fluorinated solvents in the nonaqueous solvent may be 100% by volume.

### (Cyclic compound containing sulfur element)

The cyclic compound containing the sulfur element is contained in the nonaqueous electrolyte together with the nonaqueous solvent including the fluorinated cyclic carbonate and the fluorinated chain solvent, thereby allowing a balance to be achieved between a high capacity retention ratio and a small volume change after charge-discharge cycles in the nonaqueous electrolyte energy storage device with the negative electrode containing the silicon-based active material. The cyclic compound containing the sulfur element is typically an organic compound. The cyclic compound containing the sulfur element is preferably a compound that has a heterocyclic structure containing a sulfur element. Examples of the cyclic compound containing the sulfur element include compounds that have a structure such as a cyclic sulfate structure, a sultone structure, a cyclic sulfone structure, a cyclic sulfite structure, a cyclic sulfoxide structure, and a cyclic sulfide structure. One of the cyclic compounds containing a sulfur element, or two or more thereof can be used.

The compounds that have the cyclic sulfate structure refer to compounds including a structure that has two carbon atoms each bonded to an oxysulfonyloxy group (-O-S(= O)₂-O-). Specific examples of the compounds that have the cyclic sulfate structure include ethylene sulfate (ES), 1,3-propylene sulfate, 2,3-propylene sulfate, 4,5-pentene sulfate, 4,4'-bis(2,2-dioxo-1,3,2-dioxathiolane), and 4-methylsulfonyloxymethyl-2,2-dioxo-1,3,2-dioxathiolane.

The compounds that have the sultone structure refer to compounds including a cyclic structure that has two carbon atoms each bonded to a sulfonyloxy group (-S(=O)₂-O-). The compound that has the sultone structure is a type of cyclic sulfonic acid ester, and the cyclic compound containing the sulfur element may be a cyclic sulfonic acid ester, but is preferably the compound that has the sultone structure. Specific examples of the compounds that have the sultone structure include 1,3-propane sultone (PS), 1,4-butane sultone, 1,3-propene sultone (PRS), 1-methyl-1,3-propene sultone, 2-methyl-1,3-propene sultone, 3-methyl-1,3-propene sultone, and 1,4-butene sultone, and specific examples of cyclic sulfonic acid esters other than the compounds that have the sultone structure include methylene methane disulfonate (MMDS).

The compounds that have the cyclic sulfone structure refer to compounds including a cyclic structure that has two carbon atoms each bonded to a sulfonyl group (-S(=O)₂-). Specific examples of the compounds that have the cyclic sulfone structure include sulfolane, 3-methylsulfolane, 3-sulfolene, 1,1-dioxothiophene, 3-methyl-2,5-dihydrothiophene-1,1-dioxide, and methyl 3-sulfolene-3 carboxylate.

The compounds that have the cyclic sulfite structure refer to compounds including a structure that has two carbon atoms each bonded to an oxysulfinyloxy group (-O-S(= O)-O-). Specific examples of the compounds that have the cyclic sulfite structure include ethylene sulfite, 1,2-propylene glycol sulfite, trimethylene sulfite, and 1,3-butylene glycol sulfite.

The compounds that have the cyclic sulfoxide structure refer to compounds including a cyclic structure that has two carbon atoms each bonded to a sulfinyl group (-S(=O)-). Specific examples of the compounds that have the cyclic sulfoxide structure include tetramethylene sulfoxide.

The compounds that have the cyclic sulfide structure refer to compounds including a cyclic structure that has two carbon atoms each bonded to divalent sulfur (-S-). Specific examples of the compounds that have the cyclic sulfide structure include tetrahydrothiophene, thiophene, thiane, 1,3-dithiane, 5,6-dihydro-1,4-dithiine-2,3-dicarboxylic anhydride, and 3,4-thiophenedicarboxylic anhydride.

The cyclic compound containing the sulfur element is preferably a compound that has a cyclic structure including a sulfonyl group (-S(=O)₂-). Examples of such a compound include the above-described compounds that have the cyclic sulfate structure, the sultone structure, the cyclic sulfone structure, or the like. Furthermore, as the cyclic compound containing the sulfur element, the compound that has the cyclic sulfate structure or the sultone structure is preferable, the compound that has the sultone structure is more preferable, and the compound that has a carbon-carbon double bond and the sultone structure is still more preferable. When the cyclic compound containing the sulfur element is such a compound, the capacity retention ratio and volume change after charge-discharge cycles in the nonaqueous electrolyte energy storage device to be respectively further increased and further reduced.

Some of the compounds that have the cyclic sulfate structure achieve excellent performance, like ethylene sulfate (ES) described later. In contrast, the compounds that have the sultone structure are more excellent in structural stability and solubility in nonaqueous solvents than the compounds that have the cyclic sulfate structure, and is preferable in terms of easy handling.

In addition, as the cyclic compound containing the sulfur element, a compound that has a carbon-carbon double bond is also preferable, a compound that has a carbon-carbon double bond in a heterocyclic structure containing a sulfur element is more preferable, and a compound that has a carbon-carbon double bond in a sultone structure is still more preferable. When the cyclic compound containing the sulfur element is such a compound, the capacity retention ratio and volume change after charge-discharge cycles in the nonaqueous electrolyte energy storage device to be respectively further increased and further reduced. Examples of such suitable compounds include the 1,3-propene sultone (PRS), 1-methyl-1,3-propene sultone, 2-methyl-1,3-propene sultone, 3-methyl -1,3-propene sultone, and 1,4-butene sultone exemplified above, and the 1,3-propene sultone (PRS) is particularly preferable.

The cyclic compound containing the sulfur element may be a compound composed of a carbon element, a hydrogen element, a sulfur element, and an oxygen element. One of the cyclic compounds containing a sulfur element, or two or more thereof can be used.

The lower limit of the concentration of the cyclic compound containing the sulfur element in the nonaqueous electrolyte is preferably 0.01% by mass, more preferably 0.1% by mass, still more preferably 0.5% by mass, even more preferably 1% by mass, and may be even more preferably 2% by mass, 3% by mass, or 4% by mass. The concentration of the cyclic compound containing the sulfur element is equal to or more than the lower limit mentioned above, thereby allowing the volume change after charge-discharge cycles in the nonaqueous electrolyte energy storage device to be reduced. On the other hand, the upper limit of the concentration is preferably 12% by mass, more preferably 10% by mass, still more preferably 8% by mass, even more preferably 6% by mass, and may be even more preferably 4% by mass, 3% by mass, or 2 % by mass. The concentration of the cyclic compound containing the sulfur element is equal to or less than the upper limit mentioned above, thereby allowing the capacity retention ratio after charge-discharge cycles in the nonaqueous electrolyte energy storage device to be further increased. The concentration of the cyclic compound containing the sulfur element in the nonaqueous electrolyte can be equal to or more than any of the lower limits mentioned above, and equal to or less than any of the upper limits mentioned above.

The nonaqueous electrolyte may include other additives besides the electrolyte salt, the nonaqueous solvent, and the cyclic compound containing the sulfur element. Examples of the other additives include: aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; succinic anhydride, glutaric anhydride, maleic anhydride, citraconic anhydride, glutaconic anhydride, itaconic anhydride, and cyclohexanedicarboxylic anhydride; dimethyl sulfite, methyl mthanesulfonate, busulfan, methyl toluenesulfonate, dimethyl sulfate, dimethyl sulfone, diethyl sulfone, dimethylsulfoxide, diethylsulfoxide, diphenyl sulfide, thioanisole, diphenyl disulfide, perfluorooctane, tristrimethylsilyl borate, tristrimethylsilyl phosphate, and tetrakistrimethylsilyl titanate. One of the other additives may be used alone, or two or more thereof may be used in mixture.

The content of the other additives included in the nonaqueous electrolyte is preferably 0.01% by mass or more and 10% by mass or less, more preferably 0.1% by mass or more and 7% by mass or less, still more preferably 0.2% by mass or more and 5% by mass or less, particularly preferably 0.3% by mass or more and 3% by mass or less, with respect to the total mass of the nonaqueous electrolyte. The content of the additives falls within the range mentioned above, thereby making it possible to improve the capacity retention performance or cycle performance after high-temperature storage, and further improve the safety.

In an embodiment of the present invention, the nonaqueous electrolyte may be a nonaqueous electrolyte solution. The nonaqueous electrolyte solution is, for example, a liquid nonaqueous electrolyte that has fluidity at 20°C. The lower limit of the total content of the electrolyte salt, the nonaqueous solvent, and the cyclic compound containing the sulfur element in the nonaqueous electrolyte may be 60% by mass, or may be 70% by mass, 80% by mass, 90% by mass, or 95% by mass. The upper limit of the content may be 100% by mass. The nonaqueous electrolyte may further include a solid electrolyte, a polymer, and the like. In an embodiment of the present invention, the nonaqueous electrolyte may be a gel electrolyte.

### <Nonaqueous electrolyte energy storage device>

The nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is typically a stacked type assembly that has a plurality of positive electrodes and a plurality of negative electrodes stacked with separators interposed therebetween, or a wound type assembly that has stacked positive and negative electrodes wound with a separator interposed therebetween. The nonaqueous electrolyte is present with the positive electrode, negative electrode, and separator impregnated with the electrolyte. A nonaqueous electrolyte secondary battery (hereinafter, also referred to simply as a "secondary battery") will be described as an example of the nonaqueous electrolyte energy storage device.

### (Positive electrode)

The positive electrode has a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁻² Ω ·cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 µm or more and 50 µm or less, more preferably 5 µm or more and 40 µm or less, still more preferably 8 µm or more and 30 µm or less, particularly preferably 10 µm or more and 25 µm or less. The average thickness of the positive substrate falls within the range mentioned above, thereby allowing the energy density of the nonaqueous electrolyte energy storage device to be increased while increasing the strength of the positive substrate.

The intermediate layer is a layer disposed between the positive substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

The positive active material layer includes a positive active material. The positive active material layer includes optional components such as a conductive agent, a binder, a thickener, and a filler, if necessary.

The positive active material can be appropriately selected from known positive active materials. As the positive active material for a lithium ion secondary battery, a material capable of occluding and releasing lithium ions is typically used. Examples of the positive active material include lithium-transition metal composite oxides that have an α-NaFeO₂-type crystal structure, lithium-transition metal oxides that have a spinel-type crystal structure, polyanion compounds, chalcogenides, and sulfur. Examples of the lithium-transition metal composite oxides that have an α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < γ < 1, 0 < 1-x-y), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < γ < 1, 0 < 1-x-y), Li[LiₓNi_{γ}Mn_{β}Co_{(1-x-γ-β)}]O₂ (0 ≤ x < 0.5, 0 < y, 0 < B, 0.5 < γ + β < 1, 0 < 1-x-γ-β), and Li[LiₓNi_{γ}Co_{β}Al_{(1-x-γ-β)}]O₂ (0 ≤ x < 0.5, 0 < y, 0 < B, 0.5 < γ + β < 1, 0 < 1-x-γ-β). Examples of the lithium-transition metal composite oxides that have a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include a titanium disulfide, a molybdenum disulfide, and a molybdenum dioxide. Some of atoms or polyanions in these materials may be substituted with atoms or anion species composed of other elements. These materials may have surfaces coated with other materials. In the positive active material layer, one of these materials may be used alone, or two or more thereof may be used in mixture.

As the positive active material, a lithium transition metal composite oxide is preferable, and a lithium transition metal composite oxide that has an α-NaFeO₂-type crystal structure is more preferable. The use of such a positive active material allows the discharge capacity of the nonaqueous electrolyte energy storage device to be increased.

The lithium transition metal composite oxide preferably contains a nickel element or a manganese element as a transition metal element, and more preferably contains both a nickel element and a manganese element. The lithium transition metal composite oxide may further contain other transition metal elements such as a cobalt element, typical metal elements such as an aluminum element, and the like.

As the lithium transition metal composite oxide that has an α-NaFeO₂-type crystal structure, a compound represented by the following formula (1) is preferable.

Li_{1+α}Me_{1-α}O₂ ··· (1)

In the formula (1), Me represent metal elements other than Li, containing Ni or Mn. The condition of 0 ≤ α < 1 is met.

Me in the formula (1) preferably contains Ni and Mn. Me preferably further contains Co. Me is preferably composed substantially of two elements of Ni and Mn or three elements of Ni, Mn, and Co. Me may contain other metal elements such as Al.

In the formula (1), the lower limit of the molar ratio of Ni to Me (Ni/Me) is preferably 0.1, more preferably 0.2, still more preferably 0.3, and even more preferably 0.4. On the other hand, the upper limit of the molar ratio (Ni/Me) is preferably 0.8, more preferably 0.7, still more preferably 0.6. The molar ratio (Ni/Me) can be equal to or more than any of the lower limits mentioned above, and equal to or less than any of the upper limits mentioned above.

In the formula (1), the lower limit of the molar ratio (Mn/Me) of Mn to Me is preferably 0.1, more preferably 0.2. On the other hand, the upper limit of the molar ratio (Mn/Me) is preferably 0.7, more preferably 0.6, still more preferably 0.5, even more preferably 0.4. The molar ratio (Mn/Me) can be equal to or more than any of the lower limits mentioned above, and equal to or less than any of the upper limits mentioned above.

In the formula (1), the lower limit of the molar ratio (Co/Me) of Co to Me is preferably 0, more preferably 0.05, still more preferably 0.1. On the other hand, the upper limit of the molar ratio (Co/Me) is preferably 0.4, more preferably 0.3, still more preferably 0.2. The molar ratio (Co/Me) can be equal to or more than any of the lower limits mentioned above, and equal to or less than any of the upper limits mentioned above.

In the formula (1), the molar ratio of Li to Me (Li/Me), that is, (1 + α)/(1 - α) may be 1.0 or more and 1.6 or less, 1.0 or more and 1.2 or less, or 1.0. α may be 0.

Further, the composition ratio of the lithium transition metal composite oxide refers to a composition ratio in the case of a completely discharged state provided by the following method. First, the nonaqueous electrolyte energy storage device is subjected to constant current charge with a current of 0.05 C until the voltage reaches an end-of-charge voltage under normal usage, to be brought into a fully charged state. After a 30-minute pause, the energy storage device is subjected to constant current discharge with a current of 0.05 C to the lower limit voltage under normal usage. After the device is disassembled to take out the positive electrode, a test battery using a metal lithium electrode as the counter electrode is assembled, constant current discharge is performed at a current of 10 mA per 1 g of a positive composite until the positive potential reaches 2.0 V (vs. Li/Li⁺), the positive electrode is adjusted to the completely discharged state. The device is disassembled again to take out the positive electrode. The nonaqueous electrolyte attached to the positive electrode taken out is sufficiently washed with a dimethyl carbonate, and dried at room temperature for 24 hours, and the lithium transition metal composite oxide of the positive active material is then collected. The collected lithium-transition metal composite oxide is subjected to measurement. The operations from the disassembly of the nonaqueous electrolyte energy storage device to the collection of the lithium transition metal composite oxide are performed in an argon atmosphere at a dew point of -60°C or lower. The term "under normal usage" herein means use of the nonaqueous electrolyte energy storage device while employing charge-discharge conditions recommended or specified in the nonaqueous electrolyte energy storage device, and when a charger for the nonaqueous electrolyte energy storage device is prepared, this term means use of the nonaqueous electrolyte energy storage device by applying the charger.

The lower limit of the content of the lithium transition metal composite oxide with respect to the total positive active material in the positive active material layer is preferably 50% by mass, more preferably 80% by mass, still more preferably 95% by mass. The content of the lithium transition metal composite oxide with respect to the total positive active material in the positive active material layer may be 100% by mass.

The positive active material is typically particles (powder). The average particle size of the positive active material is preferably 0.1 µm or more and 20 µm or less, for example. By setting the average particle size of the positive active material to be equal to or greater than the lower limit, the positive active material is easily manufactured or handled. By setting the average particle size of the positive active material to be equal to or less than the upper limit, the electron conductivity of the positive active material layer is improved. It is to be noted that in the case of using a composite of the positive active material and another material, the average particle size of the composite is regarded as the average particle size of the positive active material. The term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher, a classifier, or the like is used in order to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in a dry manner and in a wet manner, if necessary.

The lower limit of the content of the positive active material in the positive active material layer is preferably 50% by mass, more preferably 70% by mass, still more preferably 80% by mass, even more preferably 90% by mass. The upper limit of the content of the positive active material in the positive active material layer is preferably 99.5% by mass, more preferably 99% by mass. The content of the positive active material falls within the range mentioned above, thereby allowing a balance to be achieved between the increased energy density and manufacturability of the positive active material layer. The content of the positive active material can be equal to or more than any of the lower limits mentioned above, and equal to or less than any of the upper limits mentioned above.

The conductive agent is not particularly limited as long as the agent is a material with conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the CNTs include single-walled carbon nanotubes (SWCNTs) and multi-walled carbon nanotubes (MWCNTs). Examples of the form of the conductive agent include a powdery form and a fibrous form. As the conductive agent, one of these materials may be used alone, or two or more of these materials may be used in mixture. These materials may be composited and then used. For example, a composite material of carbon black and CNTs may be used.

The content of the conductive agent in the positive active material layer is preferably 0.1% by mass or more and 10% by mass or less, more preferably 0.2% by mass or more and 5% by mass or less. The content of the conductive agent falls within the range mentioned above, thereby allowing the energy density of the nonaqueous electrolyte energy storage device to be increased.

Examples of the binder include: thermoplastic resins such as fluororesins (e.g., a polytetrafluoroethylene (PTFE), a polyvinylidene fluoride (PVDF)), a polyethylene, a polypropylene, a polyacryl, and a polyimide; elastomers such as an ethylene-propylene-diene rubber (EPDM), a sulfonated EPDM, a styrene butadiene rubber (SBR), and a fluororubber; and polysaccharide polymers.

The content of the binder in the positive active material layer is preferably 0.4% by mass or more and 10% by mass or less, more preferably 0.8% by mass or more and 5% by mass or less. The content of the binder falls within the range mentioned above, thereby allowing the positive active material to be stably held.

Examples of the thickener include polysaccharide polymers such as carboxymethylcellulose (CMC) and methylcellulose. When the thickener has a functional group that is reactive with lithium or the like, the functional group may be deactivated by methylation or the like in advance. In an embodiment of the present invention, the thickener is preferably not contained in the positive active material layer in some cases.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof. In an embodiment of the present invention, the filler is preferably not contained in the positive active material layer in some cases.

The positive active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W as a component other than the positive active material, the conductive agent, the binder, the thickener, and the filler.

### (Negative electrode)

The negative electrode includes a negative substrate and a negative active material layer disposed directly on the negative substrate or over the negative substrate with an intermediate layer interposed therebetween. The configuration of the intermediate layer is not particularly limited, and for example, can be selected from the configurations exemplified for the positive electrode.

The negative substrate has conductivity. As the material of the negative substrate, a metal such as copper, nickel, stainless steel or a nickel-plated steel, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 µm or more and 35 µm or less, more preferably 3 µm or more and 30 µm or less, still more preferably 4 µm or more and 25 µm or less, particularly preferably 5 µm or more and 20 µm or less. The average thickness of the negative substrate falls within the range mentioned above, thereby allowing the energy density of the nonaqueous electrolyte energy storage device to be increased while increasing the strength of the negative substrate.

The negative active material layer includes a negative active material. The negative active material layer includes optional components such as a conductive agent, a binder, a thickener, and a filler, if necessary. The optional components such as a conductive agent, a binder, a thickener, and a filler can be selected from the materials exemplified for the positive electrode.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material includes a silicon-based active material. The silicon-based active material is an active material containing a silicon element. Examples of the silicon-based active material include a simple substance of silicon or a compound containing a silicon element. Examples of the compound containing the silicon element include a silicon oxide (SiOₓ: 0 < x < 2, preferably 0.8 ≤ x ≤ 1.2), a silicon nitride, a silicon carbide, and a metal silicon compound. Examples of the metal silicon compound include compounds containing an aluminum element, a tin element, a zinc element, a nickel element, a copper element, a titanium element, a vanadium element, a magnesium element, or the like, and a silicon element. In addition, the silicon-based active material may be a composite material such as a SiO/Si/SiO₂ composite material. As the silicon-based active material, pre-doped materials can also be used. More specifically, for example, the silicon-based active material may further contain a lithium element. One of the silicon-based active materials containing silicon or tin can be used, or two or more thereof can be used in mixture. Among the silicon-based active materials, the silicon oxide is preferable.

The silicon-based active material may have a surface coated with a conductive material such as carbonaceous material. The use of the silicon-based active material in such a form allows the electron conductivity of the negative active material layer to be enhanced. When the silicon-based active material has a form such as particles coated with a conductive material, the mass ratio of the conductive material to the total amount of the silicon-based active material and the conductive material coating the silicon-based active material is, for example, preferably 1% by mass or more and 10% by mass or less, more preferably 2% by mass or more and 5% by mass or less.

The form of the silicon-based active material is not particularly limited, but is preferably particulate. The average particle size of the silicon-based active material can be, for example, 1 nm or more and 100 µm or less, and may be 50 nm or more and 50 µm or less. By setting the average particle size of the silicon-based active material to be equal to or more than the lower limit mentioned above, the silicon-based active material is easily manufactured or handled. By setting the average particle size of the silicon-based active material to be equal to or less than the upper limit mentioned above, the electron conductivity of the negative active material layer is improved. A crusher, a classifier, or the like is used in order to obtain a powder with a predetermined particle size. The crushing method and the classification method can be selected from, for example, the methods exemplified for the positive electrode.

The lower limit of the content of the silicon-based active material with respect to the total negative active material in the negative active material layer is preferably 10% by mass, more preferably 50% by mass, still more preferably 70% by mass, 90% by mass, 95% by mass, or 99% by mass. The content of the silicon-based active material is equal to or more than the lower limit mentioned above, thereby allowing, for example, the discharge capacity of the nonaqueous electrolyte energy storage device to be increased. On the other hand, typically, the generation of cracks in the film and the generation of gas in association with the decomposition of the fluorinated cyclic carbonate due to the decrease in discharge capacity and the expansion of the negative active material in association with charge-discharge cycles are likely to be caused in the case of the high content of the silicon-based active material with respect to the total negative active materials. Accordingly, when an embodiment of the present invention is a nonaqueous electrolyte energy storage device in which the content of the silicon-based active material with respect to the total negative active materials is equal to or more than the lower limit mentioned above, the advantage of the high capacity retention ratio and small volume change after charge-discharge cycles is more significantly produced. The upper limit of the content of the silicon-based active material with respect to the total negative active material in the negative active material layer may be 100% by mass.

The silicon-based active material preferably contains a large amount of silicon oxide. The lower limit of the content of the silicon oxide in the silicon-based active material may be preferably 60% by mass, more preferably 70% by mass, still more preferably 90% by mass, 95% by mass, 99% by mass. The content of the silicon oxide in the silicon-based active material is equal to or more than the lower limit mentioned above, thereby allowing, for example, the discharge capacity of the nonaqueous electrolyte energy storage device to be increased.

The negative active material may include other negative active materials besides the silicon-based active material. Examples of the negative active material include metals or metalloids such as Sn; metal oxides or metalloid oxides such as oxides of Ti, and oxides of Sn; titanium-containing oxides such as Li₄Ti₅O₁₂, LiTiO₂, and TiNb₂O₇; polyphosphoric acid compounds; silicon carbides; and carbon materials such as graphite and non-graphitic carbon (easily graphitizable carbon or hardly graphitizable carbon).

The content of the negative active material in the negative active material layer is preferably 60% by mass or more and 99% by mass or less, more preferably 80% by mass or more and 98% by mass or less, still more preferably 85% by mass or more and 95% by mass or less. The content of the negative active material falls within the range mentioned above, thereby allowing a balance to be achieved between the increased energy density and productivity of the negative active material layer.

The conductive agent for use in the negative active material layer is the same as that exemplified for the positive electrode, and a fibrous conductive agent is preferable. Examples of the fibrous conductive agent include fibrous carbon materials such as carbon nanotubes (CNTs) and pitch-based carbon fibers, and among these examples, the CNTs are preferable, and SWCNTs are more preferable. The use of such a conductive agent allows sufficiently good electron conductivity to be achieved even with a small amount of conductive agent.

The content of the conductive agent in the negative active material l is preferably 0.1% by mass or more and 10% by mass or less. The upper limit may be 0.2% by mass or 0.3% by mass. On the other hand, the upper limit is preferably 5% by mass, and may be more preferably 1% by mass or 0.5% by mass. For example, the use of such a fibrous conductive agent as mentioned above allows sufficiently good electron conductivity to be achieved even with a small amount of fibrous conductive agent.

The binder for use in the negative active material layer is the same as that exemplified for the positive electrode, and among the examples, the styrene-butadiene rubber (SBR) is preferable.

The content of the binder in the negative active material layer is preferably 1% by mass or more and 30% by mass or less, more preferably 4% by mass or more and 15% by mass or less, still more preferably 6% by mass or more and 12% by mass or less. The content of the binder falls within the range mentioned above, thereby allowing, for example, the negative active material to be stably held.

The thickener for use in the negative active material layer is the same as that exemplified for the positive electrode. The negative active material layer preferably contains therein a thickener.

The content of the thickener in the negative active material layer is preferably 0.3% by mass or more and 5% by mass or less, more preferably 0.6% by mass or more and 3% by mass or less.

The filler for use in the negative active material layer is the same as that exemplified for the positive electrode. In an embodiment of the present invention, the filler is preferably not contained in the negative active material layer in some cases.

### (Separator)

The separator can be appropriately selected from known separators. As the separator, for example, a separator composed of only a substrate layer, a separator where a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, the porous resin film is preferable from the viewpoint of strength, and the nonwoven fabric is preferable from the viewpoint of liquid retaining property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a composite material of these resins may be used.

The heat resistant particles included in the heat resistant layer preferably have a mass loss of 5% or less in the case of temperature increase from room temperature to 500°C under the air atmosphere of 1 atm, still more preferably have a mass loss of 5% or less in the case of temperature increase from room temperature to 800°C. Examples of materials that have a mass loss equal to or less than a predetermined value include inorganic compounds. Examples of the inorganic compounds include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As an inorganic compound, these substances may be used alone, or two or more thereof may be used in mixture or as a composite. Among these inorganic compounds, silicon oxide, aluminum oxide, or aluminosilicate is preferable from the viewpoint of safety of the nonaqueous electrolyte energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte may be used. Examples of the polymer include a polyacrylonitrile, a polyethylene oxide, a polypropylene oxide, a polymethyl methacrylate, a polyvinyl acetate, polyvinylpyrrolidone, and a polyvinylidene fluoride. The use of the polymer gel has the effect of suppressing liquid leakage. As the separator, the polymer gel may be used in combination with a porous resin film, a nonwoven fabric, or the like as described above.

### (Nonaqueous electrolyte)

The nonaqueous electrolyte included in the nonaqueous electrolyte energy storage device according to an embodiment of the present invention is the above-mentioned nonaqueous electrolyte according to an embodiment of the present invention.

### (Shape and others)

The shape of the nonaqueous electrolyte energy storage device according to the present embodiment is not particularly limited, and examples thereof include cylindrical batteries, prismatic batteries, flattened batteries, coin batteries, and button batteries.

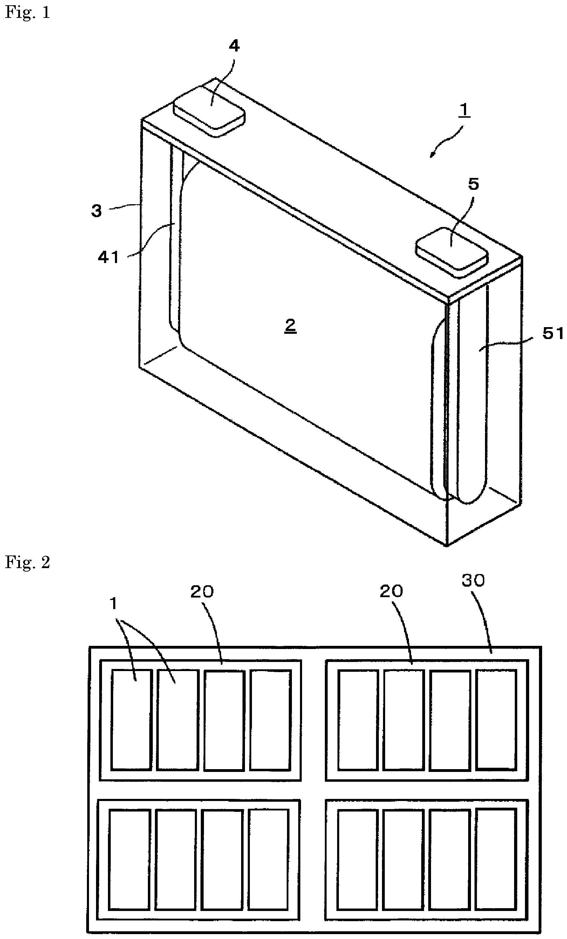

Fig. 1 shows a nonaqueous electrolyte energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The nonaqueous electrolyte energy storage device according to the present embodiment can be mounted as an energy storage unit (battery module) configured by assembling a plurality of nonaqueous electrolyte energy storage devices on a power source for automobiles such as electric vehicles (EV), hybrid vehicles (HEV), and plug-in hybrid vehicles (PHEV), a power source for electronic devices such as personal computers and communication terminals, or a power source for power storage, or the like. In this case, the technique of the present invention may be applied to at least one nonaqueous electrolyte energy storage device included in the energy storage unit.

Fig. 2 shows an example of an energy storage apparatus 30 obtained by assembling energy storage units 20 each obtained by assembling two or more electrically connected nonaqueous electrolyte energy storage devices 1. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

### <Method for manufacturing nonaqueous electrolyte energy storage device>

A method for manufacturing the nonaqueous electrolyte energy storage device according to the present embodiment can be appropriately selected from publicly known methods. The manufacturing method includes, for example, preparing an electrode assembly, preparing a nonaqueous electrolyte, and housing the electrode assembly and the nonaqueous electrolyte in a case. Preparing the electrode assembly includes: preparing a positive electrode and a negative electrode; and forming an electrode assembly by stacking or winding the positive electrode and the negative electrode with a separator interposed therebetween.

Housing the nonaqueous electrolyte in the case can be appropriately selected from known methods. For example, when the nonaqueous electrolyte is a nonaqueous electrolyte solution, the nonaqueous electrolyte solution may be injected from an inlet formed in the case, and the inlet may be then sealed.

### <Other embodiments>

It is to be noted that the nonaqueous electrolyte and nonaqueous electrolyte energy storage device according to the present invention are not limited to the embodiment mentioned above, and various changes may be made without departing from the gist of the present invention. For example, the configuration according to one embodiment can be added to the configuration according to another embodiment, or a part of the configuration according to one embodiment can be replaced with the configuration according to another embodiment or a well-known technique. Furthermore, a part of the configuration according to an embodiment can be deleted. In addition, a well-known technique can be added to the configuration according to an embodiment.

While a case where the nonaqueous electrolyte energy storage device is used as a nonaqueous electrolyte secondary battery (for example, lithium ion secondary battery) that is chargeable and dischargeable has been described in the embodiment mentioned above, the type, shape, dimensions, capacity, and the like of the nonaqueous electrolyte energy storage device are arbitrary. The present invention can also be applied to various secondary batteries, and capacitors such as electric double layer capacitors and lithium ion capacitors.

While the electrode assembly with the positive electrode and the negative electrode stacked with the separator interposed therebetween has been described in the embodiment mentioned above, the electrode assembly may include no separator. For example, the positive electrode and the negative electrode may be brought into direct contact with each other, with a non-conductive layer formed on the active material layer of the positive electrode or negative electrode.

### EXAMPLES

Hereinafter, the present invention will be described more specifically with reference to examples, but the present invention is not to be considered limited to the following examples.

### [Example 1]

### (Fabrication of positive electrode)

As a positive active material, a lithium transition metal composite oxide including an α-NaFeO₂-type crystal structure and represented by LiNi_{0.5}Co_{0.2}Mn_{0.3}O₂ was used.

Prepared was a positive composite paste containing the positive active material, acetylene black (AB) as a conductive agent, and a polyvinylidene fluoride (PVDF) as a binder at a mass ratio (in terms of solid content) of 93 : 4 : 3 and containing N-methylpyrrolidone (NMP) as a dispersion medium. The positive composite positive composite paste was applied to an aluminum foil as a positive substrate and dried, and the foil with the paste thereon was then pressed to fabricate a positive electrode with a positive active material layer disposed on the positive substrate.

### (Fabrication of negative electrode)

A silicon oxide (SiO) doped with a lithium element in advance was used as a negative active material.

Prepared was a negative composite paste containing the negative active material mentioned above, single-walled carbon nanotubes (SWCNTs) as a conductive agent, a styrene butadiene rubber (SBR) as a binder, and a carboxymethyl cellulose (CMC) as a thickener at a mass ratio (in terms of solid content) by mass of 89.7 : 0.3 : 8.8 : 1.2 and containing water as a dispersion medium. The negative composite paste was applied to a copper foil as a negative substrate, and dried to fabricate a negative electrode with a negative active material layer disposed on the negative substrate.

### (Preparation of nonaqueous electrolyte)

A solution was prepared by dissolving LiPF₆ at a concentration of 1.0 mol/dm³ in a mixed solvent obtained by mixing fluoroethylene carbonate (FEC) and 2,2,2-trifluoroethyl methyl carbonate (TFEMC) at a volume ratio of 30 : 70. Further, a nonaqueous electrolyte was obtained by dissolving 1,3-propene sultone (PRS) as the cyclic compound containing the sulfur element at a concentration of 2.0% by mass in the foregoing solution.

### (Fabrication of nonaqueous electrolyte energy storage device)

The positive electrode and the negative electrode stacked with a polyolefin microporous membrane as a separator interposed therebetween was wound to fabricate an electrode assembly. The electrode assembly was housed in a case made from a metal-resin composite film, the nonaqueous electrolyte was injected into the inside of the case, and then, an opening of the case was sealed by heat sealing to obtain a nonaqueous electrolyte energy storage device according to Example 1.

### [Examples 2 to 7 and Comparative Examples 1 to 5]

Respective nonaqueous electrolyte energy storage devices according to Examples 2 to 7 and Comparative Examples 1 to 5 were obtained similarly to Example 1 except for the concentration of the electrolyte salt (LiPF₆) in the nonaqueous electrolyte, the composition (type and volume ratio) of the nonaqueous solvent, and the concentration of the cyclic compound containing the sulfur element (PRS) in the nonaqueous electrolyte as shown in Tables 1 and 2. It is to be noted that Example 1 is listed in both Table 1 and Table 2. The "EMC" in Table 1 represents ethyl methyl carbonate.

Each of the obtained nonaqueous electrolyte energy storage devices was sandwiched between two stainless-steel plates, pressed by screwing four sides thereof, and subjected to the following capacity confirmation test and charge-discharge cycle test.

### (Capacity confirmation test)

Each of the nonaqueous electrolyte energy storage devices was subjected to a capacity confirmation test under an environment at 25°C in accordance with the following procedure.

The device was subjected to constant current constant voltage charge at a charge current of 0.2 C and an end-of-charge voltage of 4.4 V. With regard to the charge termination conditions, the charge was performed until the charge current reached 0.05 C. Thereafter, a pause period of 10 minutes was provided. Thereafter, the device was subjected to constant current discharge at a discharge current of 0.1 C and an end-of-discharge voltage of 2.5 V. The discharge capacity at this time was defined as an "initial discharge capacity".

In this case, the current of 0.1 C can be estimated by calculation from the positive electrode capacity, the negative electrode capacity, the design of the nonaqueous electrolyte energy storage device, and the like, and the validity of the current of 0.1 C can be confirmed by the fact that that the discharge time is approximately 10 hours in the constant current discharge at the current of 0.1 C in the capacity confirmation test of the nonaqueous electrolyte energy storage device.

### (Charge-discharge cycle test)

Each of the nonaqueous electrolyte energy storage devices subjected to the capacity confirmation test was subjected to a charge-discharge cycle test under an environment at 25°C in accordance with the following procedure. The device was subjected to constant current constant voltage charge at the charge current listed in Table 1 or 2 and an end-of-charge voltage of 4.4 V. The end-of-charge condition was set at a time point at which the charge current was attenuated to 0.05 C. Thereafter, the device was subjected to constant current discharge at the discharge current listed in Table 1 or 2 and an end-of-discharge voltage of 2.5. V After each of the charge and the discharge, a pause period of 10 minutes was provided. This charge-discharge step was defined as one cycle, and a charge-discharge cycle test of 300 cycles was performed.

### (Capacity retention ratio)

After the charge-discharge cycle test, the capacity confirmation test mentioned above was performed. The discharge capacity at this time was defined as a "discharge capacity after the charge-discharge cycle test". The percentage of the discharge capacity after the charge-discharge cycle test with respect to the initial (before the charge-discharge cycle test) discharge capacity was determined as a capacity retention ratio. The results are shown in Tables 1 and 2.

### (Volume change)

In the stage after the completion of 100 cycles and the stage after the completion of 300 cycles in the charge-discharge cycle test, the volume of each of the nonaqueous electrolyte energy storage devices was measured by the Archimedes method. The difference between the volume after the completion of 100 cycles and the volume after the completion of 300 cycles was determined as a volume change. For the nonaqueous electrolyte energy storage device according to Comparative Example 5, the volume change was not measured. The results are shown in Tables 1 and 2. It is to be noted that a case of the volume increased is shown as a positive value, whereas a case of the volume decreased is shown as a negative value.

**[Table 1]**

| | Nonaqueous electrolyte | | | Charge-discharge cycle test | | Evaluation result | |
|---|---|---|---|---|---|---|---|
| | Electrolyte salt (LiPF₆) | Nonaqueous solvent | Cyclic compound containing sulfur element (PRS) | Charge current /C | Discharge current /C | Capacity retention ratio /% | Volume change /cm³ |
| | Concentration /mol/dm³ | Type and volume ratio | Concentration /mass% | | | | |
| Example 1 | 1.0 | FEC:TFEMC=30:70 | 2.0 | 0.5 | 0.5 | 88.8 | 0.38 |
| Example 2 | 1.0 | FEC:TFEMC=30:70 | 3.0 | 0.5 | 0.5 | 88.3 | -0.02 |
| Example 3 | 1.0 | FEC:TFEMC=30:70 | 5.0 | 0.5 | 0.5 | 87.7 | -0.13 |
| Example 4 | 1.6 | FEC:TFEMC=30:70 | 2.0 | 0.5 | 0.5 | 88.3 | 0.09 |
| Comparative Example 1 | 1.0 | FEC:TFEMC=30:70 | - | 0.5 | 0.5 | 92.9 | 1.67 |
| Comparative Example 2 | 1.5 | FEC:EMC=30:70 | - | 1.0 | 1.0 | 93.7 | 1.68 |
| Comparative Example 3 | 1.5 | FEC:EMC=30:70 | 2.0 | 1.0 | 1.0 | 85.7 | 1.02 |
| Comparative Example 4 | 1.5 | FEC:EMC=30:70 | 2.0 | 0.5 | 0.5 | 85.2 | 0.92 |
| Comparative Example 5 | 1.5 | FEC:EMC=30:70 | 5.0 | 1.0 | 1.0 | 5.1 | - |

**[Table 2]**

| | Nonaqueous electrolyte | | | Charge-discharge cycle test | | Evaluation result | |
|---|---|---|---|---|---|---|---|
| | Electrolyte salt (LiPF₆) | Nonaqueous solvent | Cyclic compound containing sulfur element (PRS) | Charge current /C | Discharge current /C | Capacity retention ratio /% | Volume change /cm³ |
| | Concentration /mol/dm³ | Type and volume ratio | Concentration /mass% | | | | |
| Example 1 | 1.0 | FEC:TFEMC=30:70 | 2.0 | 0.5 | 0.5 | 88.8 | 0.38 |
| Example 5 | 1.0 | FEC:PC:TFEMC=20:10:70 | 2.0 | 0.5 | 0.5 | 86.8 | 0.28 |
| Example 6 | 1.0 | FEC:PC:TFEMC=10:20:70 | 2.0 | 0.5 | 0.5 | 80.1 | 0.14 |
| Example 7 | 1.0 | FEC:TFEMC=10:90 | 2.0 | 0.5 | 0.5 | 83.3 | 0.18 |

As shown in Table 1, the nonaqueous electrolyte energy storage device according to Comparative Example 1 with the nonaqueous electrolyte containing the FEC as a fluorinated cyclic carbonate and the TFEMC as a fluorinated chain solvent, but containing no PRS as a cyclic compound containing a sulfur element was high in capacity retention ratio, but large in volume change. The nonaqueous electrolyte energy storage device according to Comparative Example 2 with the nonaqueous electrolyte containing no fluorinated chain solvent or containing no cyclic compound containing a sulfur element was also large in volume change. The nonaqueous electrolyte energy storage devices according to Comparative Examples 3 and 4 with the nonaqueous electrolyte obtained by adding the cyclic compound containing the sulfur element to the nonaqueous electrolyte in Comparative Example 2 were also large in volume change. The nonaqueous electrolyte energy storage device according to Comparative Example 5 with the nonaqueous electrolyte obtained by further adding the cyclic compound containing the sulfur element to the nonaqueous electrolyte in Comparative Examples 3 and 4 underwent a decrease in capacity retention ratio.

In contrast, the respective nonaqueous electrolyte energy storage devices according to Examples 1 to 4 each with the nonaqueous electrolyte containing the FEC as a fluorinated cyclic carbonate and the TFEMC as a fluorinated chain solvent and further containing the PRS as a cyclic compound containing a sulfur element were high in capacity retention ratio and small in volume change. In addition, from comparisons such as a comparison among Examples 1 to 3 and a comparison between Example 1 and Example 4, it is found that the volume change tends to be further reduced by increasing the concentration of the cyclic compound containing the sulfur element and increasing the concentration of the electrolyte salt.

Further, Comparative Example 3 and Comparative Example 4, which are the same in terms of nonaqueous electrolyte energy storage device, differ in charge current and discharge current in the charge-discharge cycle test. Between the results of Comparative Example 3 and Comparative Example 4, there were no large differences in capacity retention ratio and volume change. More specifically, while some of the examples and comparative examples in Table 1 differ in charge current and discharge current in the charge-discharge cycle test, the differences are considered to have small influences on the results.

In addition, as shown in Table 2, it is found that the capacity retention ratio and the volume change tend to be increased by increasing the content ratio of the FEC as a fluorinated cyclic carbonate. It is found that the fluorinated cyclic carbonate is a nonaqueous solvent required for increasing the capacity retention ratio in the charge-discharge cycle, and at the same time, is a nonaqueous solvent that causes another problem of increasing the volume change.

### [Examples 8 to 9]

Respective nonaqueous electrolyte energy storage devices according to Examples 8 and 9 were obtained similarly to Example 1 except for the concentration of the electrolyte salt (LiPF₆)in the nonaqueous electrolyte as shown in Table 3. With the use of these nonaqueous electrolyte energy storage devices, the respective evaluation tests mentioned above were performed under the same conditions as in Example 1. The results are shown in Table 3 together with Example 1 and Example 4.

**[Table 3]**

| | Nonaqueous electrolyte | | | Evaluation result | |
|---|---|---|---|---|---|
| | Electrolyte salt (LiPF₆) | Nonaqueous solvent | Cyclic compound containing sulfur element (PRS) | Capacity retention ratio /% | Volume change /cm³ |
| | Concentration /mol/dm³ | Type and volume ratio | Concentration /mass% | | |
| Example 1 | 1.0 | FEC:TFEMC=30:70 | 2.0 | 88.8 | 0.38 |
| Example 8 | 1.2 | FEC:TFEMC=30:70 | 2.0 | 88.9 | 0.26 |
| Example 9 | 1.4 | FEC:TFEMC=30:70 | 2.0 | 87.4 | 0.25 |
| Example 4 | 1.6 | FEC:TFEMC=30:70 | 2.0 | 88.3 | 0.09 |

As shown in Table 3, it is found that the electrolyte salt has a concentration of 1.2 mol/dm³ or more, thereby allowing the volume change of the nonaqueous electrolyte energy storage device after charge-discharge cycles to be further reduced.

### [Example 10]

A nonaqueous electrolyte energy storage device according to Example 10 was obtained similarly to Example 4 except that the mass of the nonaqueous electrolyte injected into the case was the same as that in Comparative Example 4. With the use of this nonaqueous electrolyte energy storage devices, the respective evaluation tests mentioned above were performed under the same conditions as in Example 1. The results are shown in Table 4 together with Comparative Example 4 and Example 4. It is to be noted that the volume ratio and mass ratio of the injection amount of the nonaqueous electrolyte injected into the case in each of the examples and comparative examples are respectively shown as relative values based on Comparative Example 4.

**[Table 4]**

| | Nonaqueous electrolyte | | | | | Evaluation result | |
|---|---|---|---|---|---|---|---|
| | Electrolyte salt (LiPF₆) | Nonaqueous solvent | Cyclic compound containing sulfur element (PRS) | Injection amount | | Capacity retention ratio /% | Volume change /cm³ |
| | Concentration /mol/dm³ | Type and volume ratio | Concentration /mass% | Volume ratio | Mass ratio | | |
| Comparative Example 4 | 1.5 | FEC:EMC=30:70 | 2.0 | 1.0 | 1.0 | 85.2 | 0.92 |
| Example 4 | 1.6 | FEC:TFEMC=30:70 | 2.0 | 1.0 | 1.2 | 88.3 | 0.09 |
| Example 10 | 1.6 | FEC:TFEMC=30:70 | 2.0 | 0.8 | 1.0 | 87.5 | 0.37 |

As shown in Table 4, the sufficiently reduced volume change of the nonaqueous electrolyte energy storage device after the charge-discharge cycle, as compared with Comparative Example 4 containing no fluorinated chain solvent, is found also in Example 10 with the reduced mass of the nonaqueous electrolyte injected into the case down to the same amount as in Comparative Example 4 as compared with Example 4.

### [Example 11]

A solution was prepared by dissolving LiPF₆ at a concentration of 1.6 mol/dm³ in a mixed solvent obtained by mixing fluoroethylene carbonate (FEC) and -2,2,2-trifluoroethyl acetate (FEA) at a volume ratio of 30 : 70. A nonaqueous electrolyte was obtained by dissolving 1,3-propene sultone (PRS) as the cyclic compound containing the sulfur element in the foregoing solution at a concentration of 2.0% by mass. A nonaqueous electrolyte energy storage device according to Example 11 was obtained similarly to Example 10 except for using the electrolyte mentioned above.

### [Example 12]

A solution A was prepared by dissolving LiPF₆ at a concentration of 1.6 mol/dm³ in a mixed solvent obtained by mixing fluoroethylene carbonate (FEC) and 2,2,2-trifluoroethylmethyl carbonate (TFEMC) at a volume ratio of 30 : 70. A solution B was prepared by dissolving 1,3-propene sultone (PRS) as the cyclic compound containing the sulfur element at a concentration of 2.0% by mass in the foregoing solution A. Further, 1,1,2,2-tetrafluoro-2, 2,2-trifluoroethyl ether (TFEE) was added at a concentration of 10% by mass to the solution B to obtain a nonaqueous electrolyte. A nonaqueous electrolyte energy storage device according to Example 12 was obtained similarly to Example 10 except for using the electrolyte mentioned above.

With the use of these nonaqueous electrolyte energy storage devices, the respective evaluation tests mentioned above were performed under the same conditions as in Example 1. The results are shown in Table 5 together with Example 10.

**[Table 5]**

| | Nonaqueous electrolyte | | | | | Evaluation result | |
|---|---|---|---|---|---|---|---|
| | Electrolyte salt (LiPF₆) | Nonaqueous solvent | | | Cyclic compound containing sulfur element | Capacity retention ratio /% | Volume change /cm³ |
| | | Fluorinated cyclic carbonate | Fluorinated chain solvent | | | | |
| | Concentration /mol/dm³ | | Fluorinated chain carbonate | Fluorinated chain ester Fluorinated ether | | | |
| Example 10 | 1.6 | FEC | TFEMC | - | PRS | 87.5 | 0.37 |
| Example 11 | 1.6 | FEC | - | FEA | PRS | 86.9 | 0.76 |
| Example 12 | 1.6 | FEC | TFEMC | TFEE | PRS | 87.5 | 0.48 |

As shown in Table 5, it is found that the fluorinated chain solvent, which may be a fluorinated chain ester or a fluorinated ether, preferably include a fluorinated chain carbonate.

### [Example 13]

A nonaqueous electrolyte was prepared similarly to Example 1 except for using a 1,3-propane sultone (PS) instead of the 1,3-propene sultone (PRS). A nonaqueous electrolyte energy storage device according to Example 13 was obtained similarly to Example 10 except for using the electrolyte mentioned above.

### [Example 14]

A nonaqueous electrolyte was prepared similarly to Example 1 except for using an ethylene sulfate (ES) instead of the 1,3-propene sultone (PRS). A nonaqueous electrolyte energy storage device according to Example 14 was obtained similarly to Example 10 except for using the electrolyte mentioned above.

### [Example 15]

A nonaqueous electrolyte was prepared similarly to Example 1 except for using a methylene methane disulfonate (MMDS) instead of the 1,3-propene sultone (PRS). A nonaqueous electrolyte energy storage device according to Example 15 was obtained similarly to Example 10 except for using the electrolyte mentioned above.

With the use of the nonaqueous electrolyte energy storage devices according to Examples 13 to 15, the respective evaluation tests mentioned above were performed under the same conditions as in Example 1. The results are shown in Table 6 together with Example 10.

**[Table 6]**

| | Nonaqueous electrolyte | | | Evaluation result | |
|---|---|---|---|---|---|
| | Electrolyte salt (LiPF₆) | Nonaqueous solvent | Cyclic compound containing sulfur element | Capacity retention ratio /% | Volume change /cm³ |
| | Concentration /mol/dm³ | Type and volume ratio | | | |
| Example 10 | 1.6 | FEC:TFEMC=30:70 | PRS | 87.5 | 0.37 |
| Example 13 | 1.6 | FEC:TFEMC=30:70 | PS | 89.4 | 0.48 |
| Example 14 | 1.6 | FEC:TFEMC=30:70 | ES | 89.0 | 0.16 |
| Example 15 | 1.6 | FEC:TFEMC=30:70 | MMDS | 85.7 | 0.60 |

As shown in Table 6, from a comparison between the results of Example 10 and Example 13, it is found that the cyclic compound containing the sulfur element is a compound having a carbon-carbon double bond, thereby the volume change of the nonaqueous electrolyte energy storage device after charge-discharge cycles to be further reduced. In addition, from the results of Example 14, it is found that the cyclic compound containing the sulfur element is also preferably an ethylene sulfate (ES).

### INDUSTRIAL APPLICABILITY

The present invention can be applied to nonaqueous electrolyte energy storage devices and the like for use as power sources for electronic devices such as personal computers and communication terminals, and automobiles and the like.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A nonaqueous electrolyte for use in a nonaqueous electrolyte energy storage device with a negative electrode containing a silicon-based active material, the nonaqueous electrolyte comprising:
an electrolyte salt;
a nonaqueous solvent including a fluorinated cyclic carbonate and a fluorinated chain solvent; and
a cyclic compound containing a sulfur element,
wherein a content ratio of the fluorinated cyclic carbonate in the nonaqueous solvent is 5% by volume or more.

2. The nonaqueous electrolyte according to claim 1, wherein a total content ratio of the fluorinated cyclic carbonate and the fluorinated chain solvent in the nonaqueous solvent is 60% by volume or more.

3. The nonaqueous electrolyte according to claim 1 or 2, wherein the fluorinated chain solvent is a fluorinated chain carbonate.

4. The nonaqueous electrolyte according to claim 1 or 2, wherein the electrolyte salt has a concentration of 1.2 mol/dm³ or more.

5. The nonaqueous electrolyte according to claim 1 or 2, wherein the cyclic compound containing the sulfur element has a cyclic sulfate structure or a sultone structure.

6. The nonaqueous electrolyte according to claim 1 or 2, wherein the cyclic compound containing the sulfur element has a sultone structure.

7. The nonaqueous electrolyte according to claim 1 or 2, wherein the cyclic compound containing the sulfur element has a carbon-carbon double bond.

8. The nonaqueous electrolyte according to claim 1 or 2, wherein the cyclic compound containing the sulfur element is an ethylene sulfate.

9. The nonaqueous electrolyte according to claim 1 or 2, for use in a nonaqueous electrolyte energy storage device with a negative electrode containing a silicon-based active material containing a silicon oxide.

10. A nonaqueous electrolyte energy storage device comprising:
a negative electrode containing a silicon-based active material; and
the nonaqueous electrolyte according to claim 1 or 2.

11. The nonaqueous electrolyte energy storage device according to claim 10, wherein the silicon-based active material contains a silicon oxide.
